(19) **Europäisches Patentamt**
**European Patent Office**
**Office européen des brevets**

(11) **EP 2 158 065 B1**

(12) **FASCICULE DE BREVET EUROPEEN**

(45) Date de publication et mention
de la délivrance du brevet:
**20.04.2011 Bulletin 2011/16**

(51) Int Cl.:
***B25J 9/16*** *(2006.01)*

(21) Numéro de dépôt: **08774078.3**

(22) Date de dépôt: **12.06.2008**

(86) Numéro de dépôt international:
**PCT/EP2008/057415**

(87) Numéro de publication internationale:
**WO 2008/155287 (24.12.2008 Gazette 2008/52)**

(54) **PROCEDE DE CALIBRATION DE LA POSITION D'UN SYSTEME POLY-ARTICULE, NOTAMMENT D'UN ROBOT**

VERFAHREN ZUM KALIBRIEREN DER POSITION EINES MEHRFACH-GELENKSYSTEMS, WIE ZUM BEISPIEL EINES ROBOTERS

PROCESS FOR CALIBRATING THE POSITION OF A MULTIPLY ARTICULATED SYSTEM SUCH AS A ROBOT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.06.2007 FR 0704286**

(43) Date de publication de la demande:
**03.03.2010 Bulletin 2010/09**

(73) Titulaire: **Commissariat à l'Énergie Atomique et aux Énergies Alternatives**
**75015 Paris (FR)**

(72) Inventeurs:
• **BIDARD, Catherine**
**F-67000 Strasbourg (FR)**
• **CHALFOUN, Joe**
**F-75015 Paris (FR)**
• **KELLER, Delphine**
**F-92260 Fontenay-Aux-Roses (FR)**
• **PERROT, Yann**
**F-91700 Sainte Genevieve Des Bois (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
• **MAVROIDIS C ET AL: "A SYSTEMATIC ERROR ANALYSIS OF ROBOTIC MANIPULATORS: APPLICATION TOA HIGH PERFORMANCE MEDICAL ROBOT" PROCEEDINGS OF THE 1997 IEEE INTERNATIONAL CONFERENCE ON ROBOTICS AND AUTOMATION. ALBUQUERQUE, APR. 20 - 25, 1997, PROCEEDINGS OF THE IEEE INTERNATIONAL CONFERENCE ON ROBOTICS AND AUTOMATION, NEW YORK, IEEE, US, vol. VOL. 2 CONF. 14, 20 avril 1997 (1997-04-20), pages 980-985, XP000774320 ISBN: 0-7803-3613-5**
• **KHALIL W ET AL: "Geometric calibration of robots with flexible joints and links" JOURNAL OF INTELLIGENT AND ROBOTIC SYSTEMS: THEORY AND APPLICATIONS KLUWER ACADEMIC PUBLISHERS NETHERLANDS, vol. 34, no. 4, août 2002 (2002-08), pages 357-379, XP002473837**
• **ZHAO-HUI JIANG ED - INSTITUTE OF ELECTRICAL AND ELECTRONICS ENGINEERS: "KINEMATICS AND DYNAMICS OF FLEXIBLE SPACE ROBOT ARMS" PROCEEDINGS OF THE IEEE/RSJ INTERNATIONAL CONFERENCE ON INTELLIGENT ROBOTS AND SYSTEMS. RALEIGH, NC., JULY 7 - 10, 1992, NEW YORK, IEEE, US, vol. VOL. 3, 7 juillet 1992 (1992-07-07), pages 1681-1688, XP000334019 ISBN: 0-7803-0738-0**

**Description**

La présente invention concerne un procédé de calibration de la position d'un système poly-articulé, notamment d'un robot. Elle s'applique en particulier dans le domaine de la robotique. Elle permet de corriger l'erreur de position notamment sur des systèmes de type poly-articulés en chaîne pour lesquels la flexibilité des différents éléments de la chaîne influe sur le comportement, par exemple dans le cas d'une chaîne à fort élancement. Ces systèmes sont par exemple des robots, des manipulateurs, des grues ou des machines outil.

Ces systèmes poly-articulés peuvent être utilisés pour l'inspection des cellules et des réacteurs nucléaires ainsi que pour la maintenance de satellites et de vaisseaux spatiaux dans l'espace par exemple.

Dans la suite le terme robot sera utilisé pour décrire tous ces systèmes, qu'ils soient ou non à fort élancement.

Diverses solutions mettent en oeuvre la calibration géométrique classique. Celles-ci sont notamment décrites dans le livre de B.Mooring « Fundamentals of Manipulator Calibration », J.Wiley, New-York 1991 et l'article de Z.S.Roth, Z.W.Mooring et B.Ravani « An Overview of Robot Calibration », IEEE Journal of Robotics and Automation, vol. 3(5), 1987, pages 377-385. Ces solutions identifient les paramètres du modèle rigide du robot, notamment les longueurs. La correction d'erreur de position en bout de chaîne est très limitée avec ces méthodes classiques.

D'autres études ont développé une méthode de calibration géométrique et élastique linéaire pour régler l'erreur de position sur des robots industriels. Cette méthode est notamment décrite dans l'article de Ph.Drouet, S.Dubowsky, S.Zeghloul et C.Mavroidis « Compensation of Geometric and Elastic Errors in Large Manipulators with an Application to a High Accuracy Medical System », Robotica 2, 2002 pages 341-352. Cependant pour des robots qui possèdent une flexibilité importante dans leur structure, cette méthode n'est pas satisfaisante.

Il est par ailleurs connu d'utiliser un modèle généralisé polynomial linéaire pour corriger les petites erreurs de position des manipulateurs de grande taille. Cette solution est notamment décrite dans les articles de G.Alici et B.Shirinzadeh « A Systematic Technique to Estimate Positionning Errors for Robot Accuracy Improvement Using Laser Interferometry Based Sensing », Mechanism and Machine Theory 40, 2005, pages 879-906 et de M.Meggiolaro, S.Dubowsky et C.Mavroidis « Geometric and Elastic Error Calibration of a High Accuracy Patient Positionning System », Mechanism and Machine Theory, vol. 40, 2005, pages 415-427. Dans le premier article, on utilise des polynômes ordinaires et des polynômes de Fourier mais la correction n'est appliquée que sur la dernière articulation. Dans le deuxième article, on utilise des polynômes spéciaux appliqués sur toutes les articulations du manipulateur. Cependant, en appliquant, en simulation, ces deux méthodes, notamment pour un robot poly-articulé à fort élancement, on ne parvient pas à corriger suffisamment l'erreur de position en bout de chaîne.

Une autre méthode connue consiste à réaliser une modélisation flexible du manipulateur avec des poutres, puis à lancer une procédure d'identification des paramètres flexibles du modèle. Cette méthode est notamment décrite dans l'article de W.Khalil et E. Dombre « Modélisation, identification et commande des robots », Germes, ISBN 2-7462-0003-1, 1999 ainsi que dans l'article de KHALIL W ET AL: "Geometric calibration of robots with flexible joints and links" JOURNAL OF INTELLIGENT AND ROBOTIC SYSTEMS: THEORY AND APPLICATIONS KLUWER ACADEMIC PUBLISHERS NETHERLANDS, vol. 34, no. 4, août 2002 (2002-08), pages 357-379, XP002473837. Elle donne des résultats encore insuffisants pour corriger l'erreur de position du robot. A titre d'exemple avec ces méthodes, pour une longueur totale de chaîne articulée de l'ordre d'une dizaine de mètre, on obtient des erreurs de position de plusieurs dizaines de centimètres en bout de chaîne alors que l'on souhaite atteindre une précision de l'ordre de 10 centimètres.

Un but de l'invention est notamment d'améliorer la précision. A cet effet, l'invention a pour objet un procédé de calibration de la position d'un système poly-articulé composé d'une chaîne de N segments reliés entre eux par une liaison articulée, la calibration minimisant la différence entre la position mesurée $X_m$ d'un organe lié au dernier segment de la chaîne et sa position calculée $X_C$, $X_C$ étant égale au produit $A_1.A_2 ... A_i......A_N.X_N$, une matrice $A_i$ de transformation homogène étant associée à chaque segment d'ordre i, cette matrice étant fonction de paramètres de configuration q du système et de paramètres généralisés donnés p caractérisant la flexibilité du segment, ledit procédé comportant :

- une première étape de calcul d'un modèle flexible du système composé des matrices $A_1$, $A_2$ ... $A_i$......$A_N$ ;
- une deuxième étape de calibration du modèle flexible par l'obtention d'un ensemble de paramètres généralisés $p_{opt}$ minimisant la différence entre $X_m$ et Xc;
- une troisième étape de calibration polynomiale généralisée du modèle flexible calibré à l'étape 2 par l'introduction de matrices d'erreur généralisées $E_i$ entre les matrices de transformation homogène dans le modèle flexible, la position calculée $X_C$ étant égale au produit $A_1.E_1.A_2.E_2......A_N.E_N.X_N$, une matrice d'erreur généralisée $E_i$ étant associée à chaque segment d'ordre i, chaque matrice $E_i$ d'un segment étant une fonction polynomiale des paramètres de configuration q liés au segment.

Dans un mode de mise en oeuvre particulier, dans la première étape, le modèle flexible du système est, par exemple, obtenu par la détermination de nouveaux paramètres généralisés p à partir des paramètres rigides du système selon un processus itératif :

- un modèle géométrique est calculé en fonction de paramètres de configuration, de paramètres généralisés d'origine et de propriétés géométriques du système ;
- des déformations du système sont calculées en fonction du modèle géométrique et de contraintes mécaniques ;
- de nouveaux paramètres généralisés sont calculés en fonction des déformations ;
- les nouveaux paramètres généralisés sont comparés aux paramètres d'origine ;
- si la différence $\Delta P$ entre les nouveaux paramètres et les paramètres d'origine est inférieure à un seuil $\varepsilon$ donné, le modèle flexible est obtenu à partir des nouveaux paramètres généralisés ;
- dans le cas contraire, une nouvelle itération est exécutée, cette itération rectifiant le modèle en utilisant les nouveaux paramètres généralisés.

Les contraintes mécaniques peuvent comporter des contraintes de flexibilité appartenant aux paramètres généralisés p.

Les paramètres de configuration q comportent, par exemple, les angles des axes de rotation et d'élévation par rapport à une référence donnée.

Un segment est, par exemple, modélisé par un parallélogramme et un axe de rotation s'articulant entre deux chapes, une première chape appartenant au segment et la deuxième chape appartenant au segment suivant dans la chaîne, le parallélogramme modélisant un mouvement d'élévation autour d'un axe passant par un sommet du parallélogramme, le segment étant soumis à des contraintes de torsion, de compression et de traction.

Une matrice d'erreur généralisée $E_i$ associée à un segment est, par exemple, une fonction non linéaire de six paramètres $\varepsilon_1$, $\varepsilon_2$, $\varepsilon_3$, $\varepsilon_4$, $\varepsilon_4$, $\varepsilon_6$, trois ce ces paramètres $\varepsilon_1$, $\varepsilon_2$, $\varepsilon_3$ représentent les angles d'Euler correspondant au mouvement de rotation d'un repère lié au segment, les trois autres paramètres $\varepsilon_4$, $\varepsilon_4$, $\varepsilon_6$ représentant une translation dans l'espace du centre $O_i$ du repère, chaque paramètre généralisé est une fonction polynomiale des composantes du vecteur de configuration q.

D'autres caractéristiques et avantages de l'invention apparaîtront à l'aide de la description qui suit, faite en regard de dessins annexés qui représentent :

- la figure 1, une présentation des étapes possibles pour la mise en oeuvre d'un procédé selon l'invention ;
- la figure 2, un exemple de modèle cinématique d'un système poly-articulé ;
- la figure 3, un exemple de réalisation d'un segment appartenant à une chaîne poly-articulée ;
- la figure 4, un exemple de réalisation d'une articulation entre deux segments d'une chaîne poly-articulée ;
- la figure 5, un parallélogramme modélisant un segment ;
- la figure 6, un modèle flexible de l'ensemble d'un système poly-articulé ;
- la figure 7, une illustration des déformations d'une structure en parallélogramme sous l'influence de diverses contraintes ;
- la figure 8, une présentation d'un exemple de processus itératif utilisé dans la première étape du procédé selon l'invention ;
- la figure 9, une illustration de passages d'un repère lié à un segment à un repère lié à un autre segment.

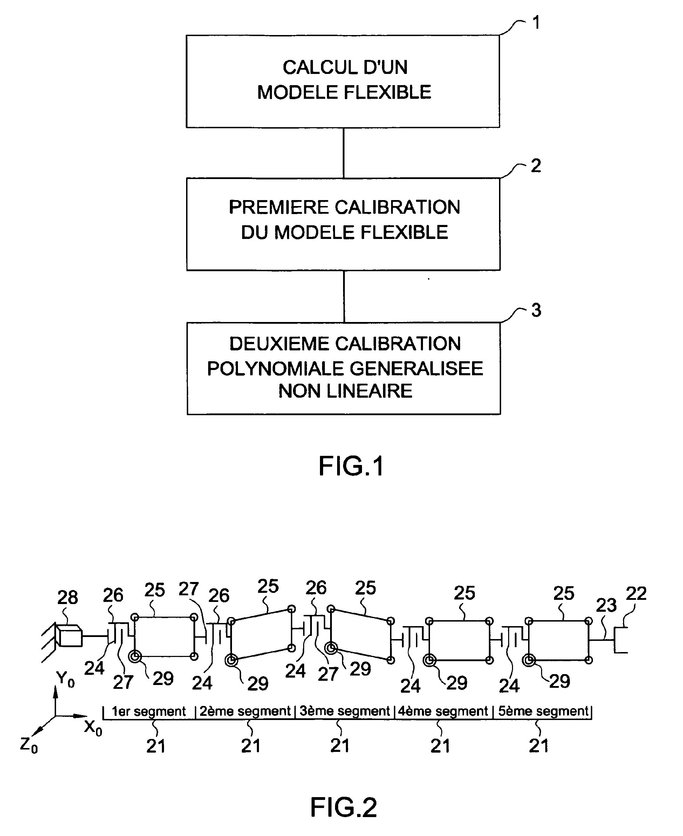

La figure 1 présente les étapes possibles pour la mise en oeuvre du procédé selon l'invention. Dans une première étape 1, on effectue un calcul d'un modèle flexible du robot par détermination de nouveaux paramètres généralisés à partir des paramètres du modèle rigide du robot. Un modèle rigide est un modèle géométrique d'un système poly-articulé sans aucune flexibilité. Un modèle flexible est un modèle géométrique d'un système poly-articulé en introduisant des flexibilités. De façon générale, un modèle géométrique direct est un modèle mécanique utilisé en robotique pour les bras manipulateurs notamment pour les robots poly-articulés. Il permet de déterminer la configuration, en position et orientation, de l'organe terminal d'un robot en fonction de la configuration de ses liaisons.

Puis, une double calibration est effectuée. Ainsi, dans une deuxième étape 2, une première calibration du modèle flexible est réalisée suivie dans une troisième étape 3 d'une calibration polynomiale généralisée.

La figure 2 présente à titre d'exemple un modèle cinématique d'un robot poly-articulé à fort élancement. Dans cet exemple, la chaîne poly-articulée comporte cinq segments 21. Un organe terminal 22 est situé en bout de chaîne, relié au dernier segment. Cet organe terminal 22, ou effecteur, est un outil placé à l'extrémité du robot, ce peut être une pince, une caméra ou tout autre type d'outil fonction de l'utilisation du robot. La liaison 23 entre l'effecteur 22 et le dernier segment 21 est rigide. Dans le modèle de la figure 2, chaque segment comporte un axe de rotation 24 et un parallélogramme 25. Un axe de rotation 24 est compris entre deux chapes 26, 27, une première chape 26 appartenant au segment lui-même et une deuxième chape 27 appartenant au segment précédent. Cet axe de rotation 24 combiné aux chapes permet de modéliser un mouvement de rotation dans un plan $X_0$, $Z_0$, par exemple le plan horizontal. D'autres types d'articulation sont possibles. Le parallélogramme permet de modéliser un mouvement d'élévation autour d'un axe 29. Le premier segment de la chaîne est, par exemple, relié à une structure fixe 28 par une articulation du même type que celle reliant deux segments entre-eux, cette structure fixe 28 formant par exemple la base du robot à laquelle peut notamment est lié un repère fixe.

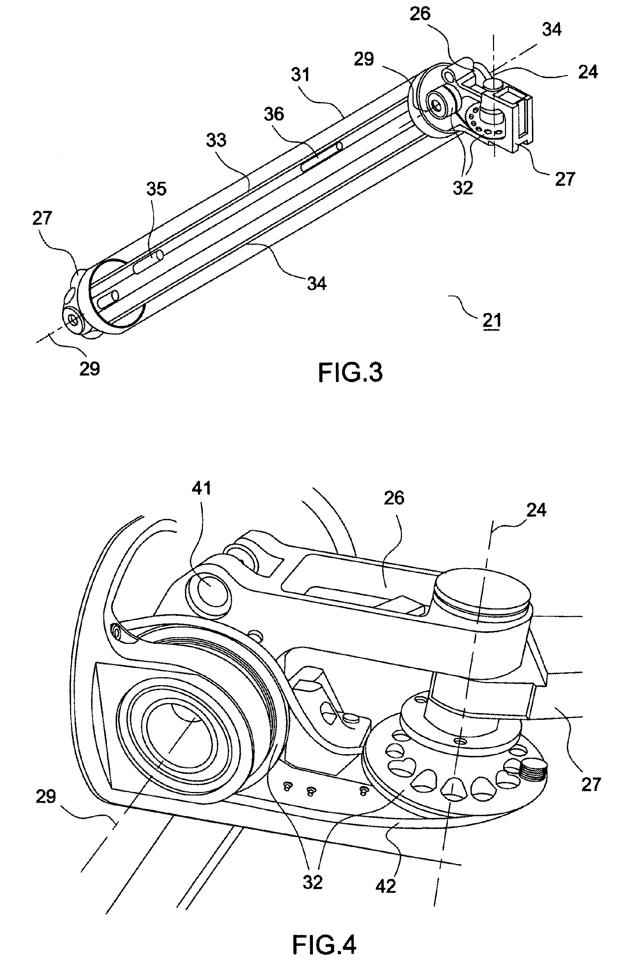

La figure 3 présente un exemple de réalisation d'un segment 21. Ce segment comporte un tube 31 comportant à chaque extrémité une chape 26, 27. Une première chape 26 s'articule autour de la chape 27 du segment suivant par l'intermédiaire de l'axe de rotation 24. Les mouvements de rotation se font au moyen de poulies de rotation 32 entraînant un câble de rotation. Le tube 31 comporte à chaque extrémité un axe d'élévation 29. Il comporte par ailleurs à l'intérieur une bielle supérieure 33 et une bielle inférieure 34 connectées aux chapes 26, 27, ainsi qu'un actionneur d'élévation 35 et un actionneur de rotation 36.

La figure 4 illustre plus en détail un exemple de réalisation d'une articulation entre deux segments consécutifs. Plus particulièrement, la première chape 26 est représentée solidaire mécaniquement d'une poulie 32, la poulie 32 tournant autour de l'axe d'élévation 29, cette première chape étant par ailleurs reliée aux bielles 33, 34 par une connexion 41. La deuxième chape 27 appartenant au segment suivant se déplace selon un degré de rotation autour de l'axe 24. L'autre poulie 32 est solidaire de cet axe 24. Le câble de rotation 42 est entraîné par les deux poulies 32. L'axe de rotation 24 et l'axe d'élévation 29 sont perpendiculaires.

Un segment est soumis à des contraintes de torsion, de compression et de traction. Cependant, pour simplifier les calculs complexes des distorsions dans cette structure, les déformations de torsion sont, par exemple, délocalisées et sont représentées après l'axe d'élévation 29 à la base d'un parallélogramme 25 modélisant le segment. Seules les compressions et les tractions dans la structure du parallélogramme sont, par exemple, considérées. De cette manière, le parallélogramme reste contenu dans un plan.

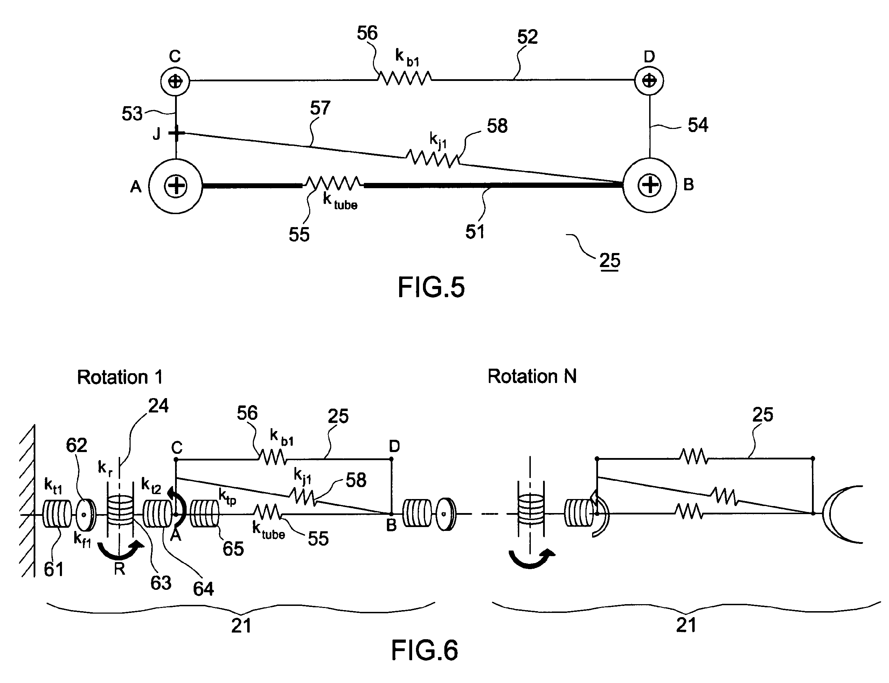

La figure 5 présente plus précisément le modèle de structure flexible d'un parallélogramme 25. Ce dernier comporte quatre points A, B, C, D. Un point A représente l'axe d'élévation 29. Le grand côté AB 51 partant de ce point A représente le tube 31. Le côté opposé CD 52 représente la bielle 33, 34. Les extrémités du tube sont modélisées par les petits côtés AC 53, BD 54 du parallélogramme. Chaque élément 51, 52, 53, 54 admet un degré de liberté dans la direction de compression et de traction. Les flexibilités de traction et de compression du tube 31 et de la bielle 33, 34 sont modélisées par des ressorts linéaires 55, 56 de raideurs respectives $k_{tube}$ et $k_{b1}$. Le parallélogramme comporte par ailleurs une branche BJ 57, le point J appartenant au côté AB 53. Cette branche 57 représente l'action de l'actionneur d'élévation 35 qui contrôle le mouvement d'élévation. Cet actionneur peut être un vérin ou un jonc d'équilibrage. Un ressort linéaire 58, de raideur $k_{j1}$, symbolise la flexibilité de cet actionneur, c'est-à-dire par exemple du jonc ou du vérin.

La figure 6 illustre un modèle flexible de l'ensemble des segments 21 formant le robot. Au parallélogramme 25 de la figure 5 s'ajoute les articulations joignant les segments consécutifs 21. Globalement, chaque segment est modélisé par :

- un ressort 61 de raideur $k_{t1}$ qui représente la torsion de la chape 26 en amont de l'axe de rotation 24 ;
- un ressort 62 de raideur $k_{f1}$ qui représente la flexion de l'axe de rotation 24 ;
- un ressort 63 de raideur $k_r$ qui représente l'élasticité des câbles de rotation 42 ;
- un ressort 64 de raideur $k_{t2}$ qui représente la torsion de la chape 27 en aval de l'axe de rotation 24 ;
- un ressort 65 de raideur $k_{tp}$ qui représente la torsion du parallélogramme 25 ;
- les ressorts 56, 58, 55 décrit précédemment, de raideur $k_{b1}$ représentant la flexibilité de la bielle, de raideur $k_{j1}$ représentant la flexibilité du vérin ou du jonc et de raideur $k_{tube}$ représentant la flexibilité du tube en compression.

Ces flexibilités vont introduire une déformation de la structure. Le modèle géométrique direct MGD de rotation est obtenu en fonction de sept paramètres généralisés $\varphi_{t1}$, $\varphi_{f1}$, $\theta$, $\varphi_r$, $\varphi_{t2}$, $\alpha$, $\varphi_{tb}$ qui représentent respectivement les angles de rotation de des ressorts 61, 62 de raideurs $k_{t1}$, $k_{f1}$, l'angle de rotation autour de l'axe de rotation, les angles de rotation de des ressorts 63, 64 de raideurs $k_r$, $k_{t2}$, l'angle de rotation autour de l'axe d'élévation, et l'angle de rotation du ressort 65 de raideur $k_{tp}$.

Pour calculer le MGD de rotation on utilise par exemple une matrice de transformation homogène (4x4) notée A. Cette matrice est fonction des paramètres généralisés et de la configuration du robot. Elle s'écrit sous la forme suivante :

$$\mathbf{A}(angle) = \begin{bmatrix} \mathbf{R}(angle) & \mathbf{T} \\ \mathbf{0}(1 \times 3) & 1 \end{bmatrix} \qquad (1)$$

où :

- le paramètre *angle* représente un des paramètres généralisés $\varphi_{t1}$, $\varphi_{f1}$, $\theta$, $\varphi_r$, $\varphi_{t2}$, $\alpha$, $\varphi_{tb}$;
- R est une matrice de rotation de dimension (3x3) ;
- T est un vecteur de translation de dimension (3x1) ;
- 0 est un vecteur nul de dimension (1 x3).

Le MGD de rotation, représenté par une matrice A$_r$, se calcule alors selon la relation suivante :

$$\mathbf{A_r} = \mathbf{A}(\varphi_{t1}) \times \mathbf{A}(\varphi_{f1}) \times \mathbf{A}(\theta) \times \mathbf{A}(\varphi_r) \times \mathbf{A}(\varphi_{t2}) \times \mathbf{A}(\alpha) \times \mathbf{A}(\varphi_{tb}) \quad (2)$$

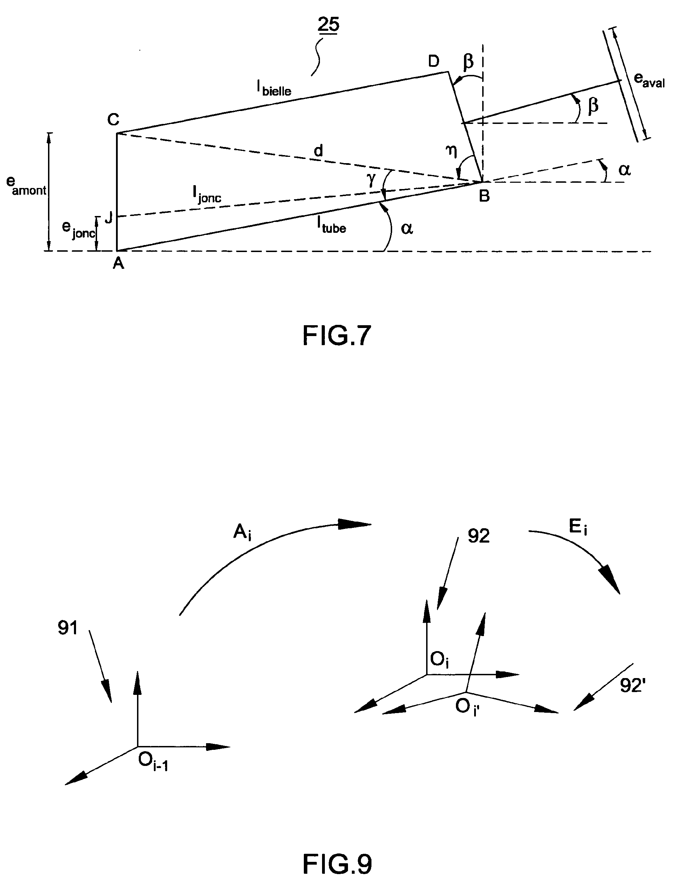

La figure 7 montre la déformation de la structure de parallélogramme 25 sous l'influence des forces de compression et de traction provenant du poids des segments 21 qui le suivent. Le MGD du parallélogramme donne la position et l'orientation de la pièce d'extrémité postérieure BD dans le système de coordonnées de la base du parallélogramme au point A. Ce calcul est géométrique et est réalisé dans un plan, le plan du parallélogramme. Le MGD du parallélogramme, représenté par une matrice de transformation homogène A$_p$, se calcule en fonction de trois paramètres généralisés, l'angle $\alpha$ d'élévation précité et les longueurs $l_{tube}$ du tube et $l_{bielle}$ de la bielle.

Le MGD d'un segment est la combinaison du MGD du parallélogramme 25 et du MGD de l'axe de rotation 24. La combinaison des deux MGD se fait par une multiplication matricielle des matrices homogènes correspondantes A$_r$, A$_p$. La matrice représentative du MGD d'un segment d'ordre i est donc obtenue par la relation suivante :

$$A_{segment\,i} = A_r \times A_p \quad (3)$$

Le MGD de la chaîne complète représentant un robot est obtenu en combinant les N segments de la chaîne, la matrice représentative de l'ensemble A$_{robot}$ étant donnée par la relation suivante :

$$A_{robot} = A_{segment1} \times A_{segment2} \times \ldots\ldots\ldots \times A_{segmentN} \quad (4)$$

Le modèle flexible a notamment pour but de fournir la position et l'orientation de l'effecteur 22 en fonction des positions articulaires imposées et des paramètres suivant :

- la masse, la longueur et la position du centre de gravité des segments 21 ;
- les raideurs k des différentes parties du robot et des paramètres généralisés.

Dans l'étape 1 de calcul du modèle flexible, on affecte des valeurs nominales a priori aux paramètres k. Un but des étapes suivantes est de définir les valeurs pour des robots réels, à partir des valeurs nominales a priori.

Ce modèle flexible initial peut donc être obtenu par un processus itératif. L'article de W. Khalil et E. Dombre « Modélisation, identification et commande des robots » décrit un tel processus itératif. Dans la présente étape 1 du procédé selon l'invention, la méthode de calcul peut néanmoins être différente et donc le processus itératif différent.

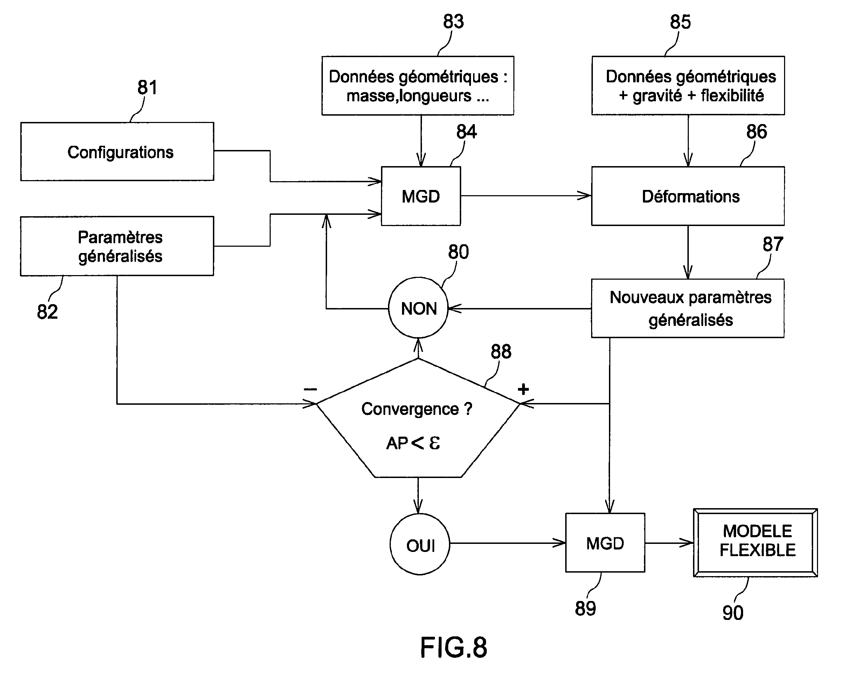

La figure 8 illustre ce processus itératif utilisé, par exemple, dans la première étape 1 du procédé selon l'invention. Le calcul commence, par exemple, par un modèle rigide. Pour un ensemble de configurations 81 et en utilisant les paramètres généralisés 82 et les propriétés géométriques de la structure 83, le MGD 84 du robot est calculé. En introduisant les flexibilités de la structure et l'effet de gravité imposé 85, les efforts appliqués sur les parallélogrammes 25 et les axes de rotation 24 sont calculés, ce qui permet de modéliser les déformations 86. Ces déformations 86 sont, par la suite, utilisées pour actualiser les paramètres généralisés 87 du robot et sont comparées 88 aux anciennes valeurs 82.

Si la différence $\Delta P$ entre les nouveaux et les anciens paramètres généralisés est inférieure à un seuil $\varepsilon$ donné, le modèle flexible 90 est obtenu, à partir du

MGD actualisé 89 et des nouveaux paramètres généralisés 87. Dans le cas contraire 80, une nouvelle itération est exécutée, cette itération rectifiant l'ancien modèle 84 en utilisant les nouveaux paramètres généralisés. Cet algorithme est répété jusqu'à convergence. Environ trois à quatre itérations peuvent être nécessaires pour obtenir une différence inférieure à $10^{-6}$ mètre ou radiant entre les différents paramètres généralisés.

La flexibilité des articulations 24, 26, 27 et des corps 25 du robot a un impact significatif sur la performance de ce dernier en ce qui concerne la précision de positionnement de l'effecteur 22, ainsi que sur la stabilité de cette position. L'effet de gravité et la charge au bout de chaque segment 21 provoque une déviation des articulations flexibles, ce qui dégrade la performance du robot. Pour les robots de grandes dimensions notamment, les flexibilités qui ont déjà été prises en compte dans le calcul du modèle sont calibrées lors des deux étapes suivantes 2, 3.

La deuxième étape 2 comporte donc une phase de calibration ou d'étalonnage du modèle flexible obtenu dans la première étape 1. Le processus d'étalonnage minimise une grandeur X$_m$ - X$_C$. Une grandeur X peut être un vecteur à six composantes incluant trois composantes de translation et trois composantes de rotation. Une telle grandeur détermine le déplacement d'un point dans l'espace, en l'occurrence les positions des parallélogrammes ou la position de l'effecteur 22.

$X_m$ est la position mesurée parmi les articulations des parallélogrammes et de l'effecteur. La sélection des mesures est notamment fonction de l'application, des moyens de mesure et de la précision souhaitée. Cette position mesurée $X_m$ peut donc représenter soit la position de l'effecteur 22, soit la position des articulations intermédiaires.

La position $X_C$ est la position calculée par le MGD flexible du robot dans la première étape 1, pour les mêmes articulations ainsi que pour l'effecteur. $X_C$ est fonction du vecteur de configurations q et du vecteur des paramètres p. Les configurations du système évoquées précédemment peuvent être représentées par le vecteur de configurations q, les composantes de ce vecteur étant les angles des articulations, ou axes de rotation, du robot.

Les paramètres identifiables du vecteur p sont notamment la masse, la longueur, la position du centre de gravité, les raideurs des différentes parties du robot et les paramètres généralisés décrits précédemment. Le vecteur Xc peut donc s'écrire selon la relation suivante :

$$Xc = f(p, q) \qquad (5)$$

où :

$$f(p, q) = A_1.A_2 \ldots A_i \ldots \ldots A_N.X_N \qquad (6)$$

$X_N$ étant la position de l'effecteur 22 par rapport au dernier segment, le segment d'ordre N, cette position est facilement déterminable. $A_i$ est la matrice de transformation homogène associée au segment d'ordre i décrite précédemment relativement à la relation (1).

En utilisant par exemple le vecteur $p_0$ des paramètres, $p_0$ ayant été utilisé dans la première étape comme représentant les paramètres donnés par le constructeur du robot, on obtient la position nominale $X_0$. En utilisant par ailleurs le vecteur rigide $p_{rigide}$ des paramètres, on obtient la position $X_{rigide}$ pour un certain nombre de configurations. Dans ce vecteur $p_{rigide}$, seuls θ et α sont variables. Les autres paramètres généralisés, relatifs à la flexibilité, $\varphi_{t1}$, $\varphi_{f1}$, $\varphi_r$, $\varphi_{t2}$, $\varphi_{tb}$ ont une valeur égale à 0 et toutes les raideurs k ont une valeur infinie, ce qui serait le cas d'un système parfaitement rigide. Un but est de déterminer le vecteur $p_{opt}$ des paramètres qui minimise, par exemple, dans le sens des moindres carrés, l'erreur de position $X_m - X_C$ pour un nombre suffisant de configurations, $X_m$ étant imposée comme intrinsèquement liée au robot à calibrer. Les valeurs nominales $p_0$ des paramètres servent comme point de départ d'un algorithme d'optimisation utilisé. Un algorithme d'optimisation utilisé peut être, par exemple, l'algorithme d'optimisation non linéaire décrit dans l'article de T.F.Coleman and Y.Li « On the Convergence of Reflective Newton Methods for Large-Scale Nonlinear Minimization Subject to Bounds » in Mathematical Programming, Vol. 67, Number 2, 1994, pages 189-224.

La troisième étape 3 complète l'étape précédente par une application d'une calibration polynomiale généralisée. La cinématique du robot est notamment définie par des repères liés à la base 28 du robot, aux différents segments 21 et à l'effecteur 22. Le passage d'un repère à un autre se réalise par des matrices de transformation homogène $A_i$ qui sont notamment fonction de la configuration et des paramètres du robot.

Sans correction d'erreur, la position de l'effecteur par rapport à la base du robot $X_{C1}$ est donc calculée selon la relation suivante :

$$X_{C1} = A_1.A_2 \text{ x} \ldots \ldots A_N.X_N \qquad (7)$$

où $X_{C1}$ est la position flexible de l'effecteur 22 par rapport à la base du robot, calculée dans la deuxième étape 2. Ce vecteur représente une position idéale calculée à partir du modèle flexible du robot obtenu à l'étape 2. Comme précédemment, $X_N$ est le vecteur représentant la position de l'effecteur par rapport au dernier segment et $A_i$, i étant égal à 1, 2, .... N, est la matrice de transformation homogène flexible de l'articulation d'ordre i.

Pour corriger l'erreur de position des matrices d'erreur généralisées $E_i$ sont intercalée entre chaque matrice de transformation homogène $A_i$. Des matrices d'erreur généralisées sont notamment décrites dans l'article de M.Meggioalaro, S. Dubowsky et C. Mavroidis « Geometric and elastic error calibration of a high accuracy patient positioning system » in Mechanism and Machine Theory, vol. 40, 2005, pages 415-427. Pour obtenir la nouvelle position $X_{C2}$ la relation (7) est donc corrigée pour obtenir la relation suivante :

$$X_{C2} = A_1.E_1.A_2.E_2 \ldots\ldots A_N.E_N.X_N \qquad\qquad (8)$$

$X_{C2}$ est la position réelle de l'effecteur par rapport à la base du robot et $E_i$ est la matrice d'erreur généralisée qui suit la matrice de transformation homogène $A_i$ associée au segment d'ordre i.

Les matrices d'erreur généralisées $E_i$ sont notamment destinées à corriger l'erreur de position angulaire des axes de rotation de chaque segment. En particulier pour l'articulation du segment d'ordre i, la matrice $E_i$ permet le passage du repère idéal, flexible, au repère réel.

La figure 9 illustre les passages entre repères. En particulier la figure 9 présente un repère 91 lié au segment d'ordre i-1 ayant son centre en un point $O_{i-1}$ du segment. La matrice de transformation $A_i$ permet de passer du repère 91 lié au segment d'ordre i-1 au repère 92 lié au segment d'ordre i ayant son centre en un point $O_i$ de ce segment. Puis la matrice d'erreur généralisée $E_i$ permet de passer de ce repère idéal à un repère réel 92', par la combinaison d'un mouvement de translation et d'un mouvement de rotation, la translation faisant notamment passer le repère du centre $O_i$ à un centre $O_i$'.

Les éléments de chaque matrice $E_i$ sont fonction non-linéaire des six paramètres généralisés $\varepsilon_1$, $\varepsilon_2$, $\varepsilon_3$, $\varepsilon_4$, $\varepsilon_4$, $\varepsilon_6$, trois ce ces paramètres $\varepsilon_1$, $\varepsilon_2$, $\varepsilon_3$ représentant les angles d'Euler correspondant au mouvement de rotation, les trois autres paramètres $\varepsilon_4$, $\varepsilon_4$, $\varepsilon_6$ représentent une translation dans l'espace. Chaque paramètre généralisé est une fonction polynomiale de la géométrie du système poly-articulé formant le robot et donc du vecteur de configuration q.

Selon l'invention, les matrices $A_i$ représentent le modèle flexible du robot et les matrices $E_i$ sont non-linéaires en fonction des paramètres généralisés. En particulier, la matrice $E_i$ peut s'écrire sous la forme suivante :

$$\mathbf{E_i} = \begin{bmatrix} C\varepsilon_4 C\varepsilon_6 - S\varepsilon_4 S\varepsilon_5 S\varepsilon_6 & -C\varepsilon_4 S\varepsilon_6 - S\varepsilon_4 C\varepsilon_5 C\varepsilon_6 & S\varepsilon_4 S\varepsilon_5 & \varepsilon_1 \\ S\varepsilon_4 C\varepsilon_6 + C\varepsilon_4 C\varepsilon_5 S\varepsilon_6 & -S\varepsilon_4 S\varepsilon_6 + C\varepsilon_4 C\varepsilon_5 C\varepsilon_6 & -C\varepsilon_4 S\varepsilon_5 & \varepsilon_2 \\ S\varepsilon_5 S\varepsilon_6 & S\varepsilon_5 C\varepsilon_6 & C\varepsilon_5 & \varepsilon_3 \\ 0 & 0 & 0 & 1 \end{bmatrix}$$

où $C\varepsilon_i$ représente le cosinus de l'angle d'Euler $\varepsilon_i$ et $S\varepsilon_i$ son sinus.

En raison notamment de la structure du parallélogramme, le modèle flexible du robot présente une redondance dans ses paramètres. Il existe des paramètres qui sont fonction d'autres paramètres du modèle. Seuls les paramètres indépendants sont identifiés. Le gradient de la fonction objective définie par la relation (7) peut être développé pour éliminer la dépendance des paramètres. Il permet également d'augmenter la robustesse de la méthode d'optimisation. Une méthode d'optimisation utilisée peut être la méthode des moindres carrés non-linéaire, l'algorithme utilisé étant l'algorithme décrit dans l'article de T.F Coleman et al.

Pour un ensemble de configurations donné, le gradient de la fonction objective devient une matrice W où le nombre m de configurations est plus grand que le nombre de paramètres à identifier. La décomposition de la matrice W donne une matrice triangulaire supérieure R. Les paramètres indépendants sont par exemple trouvés en utilisant les éléments diagonaux r de la matrice triangulaire R qui vérifient la relation suivante :

$$r > mx \max(|R_{ii}|)x\varepsilon \qquad\qquad (9)$$

Avantageusement, la solution proposée par l'invention permet de mieux corriger l'erreur de position sur des robots de grande taille mais aussi sur des robots de petite taille. En particulier, l'invention est applicable pour tous types de robots manipulateur ou de systèmes flexibles.

## Revendications

1. Procédé de calibration de la position d'un système poly-articulé composé d'une chaîne de N segments (21) reliés entre eux par une liaison articulée (24, 26, 27), la calibration minimisant la différence entre la position mesurée $X_m$

d'un organe (22) lié au dernier segment de la chaîne et sa position calculée $X_C$, $X_C$ étant égale au produit $A_1.A_2 ... A_i......A_N.X_N$, une matrice $A_i$ de transformation homogène étant associée à chaque segment d'ordre i (21), cette matrice étant fonction de paramètres de configuration (q) du système et de paramètres généralisés donnés (p) caractérisant la flexibilité du segment (21), **caractérisé en ce que** ledit procédé comporte :

- une première étape (1) de calcul d'un modèle flexible du système composé des matrices $A_1$, $A_2$ ... $A_i......A_N$ ;
- une deuxième étape (2) de calibration du modèle flexible par l'obtention d'un ensemble de paramètres généralisés ($p_{opt}$) minimisant la différence entre $X_m$ et $X_c$ ;
- une troisième étape (3) de calibration polynomiale généralisée du modèle flexible par l'introduction de matrices d'erreur généralisées $E_i$ entre les matrices de transformation homogène dans le modèle flexible, la position calculée $X_C$ étant égale au produit $A_1.E_1.A_2.E_2......A_N.E_N.X_N$, une matrice d'erreur généralisée $E_i$ étant associée à chaque segment d'ordre i, chaque matrice $E_i$ d'un segment étant une fonction polynomiale des paramètres de configuration (q) liés au segment.

2. Procédé selon la revendication 1, **caractérisé en ce que** dans la première étape (1) le modèle flexible du système est obtenu par la détermination de nouveaux paramètres généralisés (p) à partir des paramètres rigides du système selon un processus itératif :

- un modèle géométrique (84) est calculé en fonction de paramètres de configuration (81), de paramètres généralisés d'origine (82) et de propriétés géométriques (83) du système ;
- des déformations (86) du système sont calculées en fonction du modèle géométrique (84) et de contraintes mécaniques (85) ;
- de nouveaux paramètres généralisés (87) sont calculés en fonction des déformations (86) ;
- les nouveaux paramètres généralisés (87) sont comparés aux paramètres d'origine (82) ;
- si la différence $\Delta P$ entre les nouveaux paramètres (87) et les paramètres d'origine (82) est inférieure à un seuil $\varepsilon$ donné, le modèle flexible (90) est obtenu à partir des nouveaux paramètres généralisés (87) ;
- dans le cas contraire (80), une nouvelle itération est exécutée, cette itération rectifiant le modèle (84) en utilisant les nouveaux paramètres généralisés.

3. Procédé selon la revendication 2, **caractérisé en ce que** les contraintes mécaniques comporte des contraintes de flexibilité appartenant aux paramètres généralisés (p).

4. Procédé selon l'une quelconque des revendications précédentes, **caractérisé en ce que** les paramètres de configuration (q) comportent les angles des axes de rotation (24) et d'élévation (29) par rapport à une référence donnée.

5. Procédé selon l'une quelconque des revendications précédentes, **caractérisé en ce qu'**un segment (21) est modélisé par un parallélogramme (25) et un axe de rotation (24) s'articulant entre deux chapes (26, 27), une première chape (26) appartenant au segment et la deuxième chape (27) appartenant au segment suivant dans la chaîne, le parallélogramme modélisant un mouvement d'élévation autour d'un axe (29) passant par un sommet du parallélogramme, le segment étant soumis à des contraintes de torsion, de compression et de traction.

6. Procédé selon la revendication 5, **caractérisé en ce que** chaque segment (21) est modélisé par les paramètres de flexibilité suivante :

- un ressort (61) de raideur $k_{t1}$ qui représente la torsion de la chape (26) en amont de l'axe de rotation (24) ;
- un ressort (62) de raideur $k_{f1}$ qui représente la flexion de l'axe de rotation (24) ;
- un ressort (63) de raideur $k_r$ qui représente l'élasticité d'un élément de transmission de mouvement de rotation (42) ;
- un ressort (64) de raideur $k_{t2}$ qui représente la torsion de la chape (27) en aval de l'axe de rotation (24) ;
- un ressort (65) de raideur $k_{tp}$ qui représente la torsion du parallélogramme (25) ;
- des ressorts (56, 58, 55) de raideur $k_{b1}$ représentant la flexibilité d'un côté (52) du parallélogramme, de raideur $k_{tube}$ représentant la flexibilité du côté opposé (51) et de raideur $k_{j1}$ représentant la flexibilité d'une branche (57) reliant un point (J) du côté adjacent (53) à une extrémité (B) de ce côté (51) ;
un modèle de rotation étant obtenu en fonction des paramètres généralisés de flexibilité $\varphi_{t1}$, $\varphi_{f1}$, $\theta$, $\varphi_r$, $\varphi_{t2}$, $\alpha$, $\varphi_{tb}$ représentant respectivement les angles de rotation de des ressorts (61, 62) de raideurs $k_{t1}$, $k_{f1}$, l'angle de rotation autour de l'axe de rotation (24), les angles de rotation de des ressorts (63, 64) de raideurs $k_r$, $k_{t2}$, l'angle de rotation autour de l'axe d'élévation (29), et l'angle de rotation du ressort (65) de raideur $k_{tp}$.

**7.** Procédé selon la revendication 5, **caractérisé en ce qu'**un segment (21) comportant un tube (31) équipé d'une bielle (33, 34) et muni à chaque extrémité d'une chape (26, 27), une première chape (26) s'articulant autour de la chape (27) du segment suivant par l'intermédiaire de l'axe de rotation (24), les mouvements de rotation se faisant au moyen de poulies de rotation (32) entraînant un câble de rotation (42), un côté du segment (51) modélise le tube, le côté opposé (52) modélise la bielle, la branche (57) modélise un élément d'équilibrage et l'élément de transmission de mouvement de rotation (42) modélise le câble de rotation.

**8.** Procédé selon l'une quelconque des revendications précédentes, **caractérisé en ce que** une matrice d'erreur généralisée $E_i$ associée à un segment (21) est une fonction non linéaire de six paramètres $\varepsilon_1$, $\varepsilon_2$, $\varepsilon_3$, $\varepsilon_4$, $\varepsilon_4$, $\varepsilon_6$, trois ce ces paramètres $\varepsilon_1$, $\varepsilon_2$, $\varepsilon_3$ représentant les angles d'Euler correspondant au mouvement de rotation d'un repère (92) lié au segment, les trois autres paramètres $\varepsilon_4$, $\varepsilon_4$, $\varepsilon_6$ représentant une translation dans l'espace du centre $O_i$ du repère (92), chaque paramètre généralisé est une fonction polynomiale des composantes du vecteur de configuration (q).

**9.** Procédé selon la revendication 8, **caractérisé en ce que** la matrice $E_i$ s'écrit sous la forme suivante :

$$\mathbf{E_i} = \begin{bmatrix} C\varepsilon_4 C\varepsilon_6 - S\varepsilon_4 S\varepsilon_5 S\varepsilon_6 & -C\varepsilon_4 S\varepsilon_6 - S\varepsilon_4 C\varepsilon_5 C\varepsilon_6 & S\varepsilon_4 S\varepsilon_5 & \varepsilon_1 \\ S\varepsilon_4 C\varepsilon_6 + C\varepsilon_4 C\varepsilon_5 S\varepsilon_6 & -S\varepsilon_4 S\varepsilon_6 + C\varepsilon_4 C\varepsilon_5 C\varepsilon_6 & -C\varepsilon_4 S\varepsilon_5 & \varepsilon_2 \\ S\varepsilon_5 S\varepsilon_6 & S\varepsilon_5 C\varepsilon_6 & C\varepsilon_5 & \varepsilon_3 \\ 0 & 0 & 0 & 1 \end{bmatrix}$$

$C\varepsilon_i$ représentant le cosinus de l'angle d'Euler $\varepsilon_i$ et $S\varepsilon_i$ son sinus.

**Claims**

**1.** A method of calibrating the position of a multiply-articulated system consisting of a chain of N segments (21) interlinked by an articulated link (24, 26, 27), the calibration minimizing the difference between the measured position $X_m$ of a member (22) linked to the last segment of the chain and its calculated position $X_C$, $X_C$ being equal to the product $A_1.A_2 ... A_i......A_N.X_N$, a homogeneous transformation matrix $A_i$ being associated with each segment of order I (21), this matrix being a function of configuration parameters (q) of the system and of given generalized parameters (p) characterizing the flexibility of the segment (21), **characterized in that** said method comprises:

- a first step (1) of calculating a flexible model of the system consisting of the matrices $A_1$, $A_2$ ... $A_i......A_N$ ;
- a second step (2) of calibrating the flexible model by obtaining a set of generalized parameters ($p_{opt}$) minimizing the difference between $X_m$ and $X_C$;
- a third step (3) of generalized polynomial calibration of the flexible model by the introduction of generalized error matrices $E_i$ between the homogeneous transformation matrices in the flexible model, the calculated position $X_C$ being equal to the product $A_1.E_1.A_2.E_2......A_N.E_N.X_N$, a generalized error matrix $E_i$ being associated with each segment of order i, each matrix $E_i$ of a segment being a polynomial function of the configuration parameters (q) linked to the segment.

**2.** The method according to claim 1, **characterized in that** in the first step (1) the flexible model of the system is obtained by the determination of new generalized parameters (p) from the rigid parameters of the system according to an iterative process:

- a geometrical model (84) is calculated as a function of configuration parameters (81), of original generalized parameters (82) and of geometrical properties (83) of the system;
- deformations (86) of the system are calculated as a function of the geometrical model (84) and of mechanical stresses (85) ;
- new generalized parameters (87) are calculated as a function of the deformations (86) ;
- the new generalized parameters (87) are compared to the original parameters (82) ;
- if the difference $\Delta P$ between the new parameters (87) and the original parameters (82) is less than a given threshold $\varepsilon$, the flexible model (90) is obtained from the new generalized parameters (87) ;
- otherwise (80), a new iteration is executed, this iteration rectifying the model (84) by using the new generalized parameters.

3. The method according to claim 2, **characterized in that** the mechanical stresses include flexibility stresses belonging to the generalized parameters (p).

4. The method according to any one of the preceding claims, **characterized in that** the configuration parameters (q) include the angles of the rotation axes (24) and of elevation (29) relative to a given reference.

5. The method according to any one of the preceding claims, **characterized in that** a segment (21) is modeled by a parallelogram (25) and a rotation axis (24) being articulated between two joints (26, 27), a first joint (26) belonging to the segment and the second joint (27) belonging to the next segment in the chain, the parallelogram modeling an elevation movement about an axis (29) passing through a peak of the parallelogram, the segment being subject to torsion, compression and traction stresses.

6. The method as claimed in claim 5, **characterized in that** each segment (21) is modeled by the following flexibility parameters:

- a spring (61) of stiffness $k_{t1}$ which represents the torsion of the joint (26) upstream of the rotation axis (24);
- a spring (62) of stiffness $k_{f1}$ which represents the deflection of the rotation axis (24);
- a spring (63) of stiffness $k_r$ which represents the elasticity of a rotation movement transmission element (42);
- a spring (64) of stiffness $k_{t2}$ which represents the torsion of the joint (27) downstream of the rotation axis (24);
- a spring (65) of stiffness $k_{tp}$ which represents the torsion of the parallelogram (25);
- springs (56, 58, 55) of stiffness $k_{b1}$ representing the flexibility of a side (52) of the parallelogram, of stiffness $k_{tube}$ representing the flexibility of the opposite side (51) and of stiffness $k_{j1}$ representing the flexibility of a branch (57) linking a point (J) of the adjacent side (53) to an end (B) of this side (51);

a rotation model being obtained as a function of the generalized flexibility parameters $\varphi_{t1}$, $\varphi_{f1}$, $\theta$, $\varphi_r$, $\varphi_{t2}$, $\alpha$, $\varphi_{tb}$ respectively representing the rotation angles of the springs (61,62) of stiffnesses $k_{t1}$, $k_{f1}$, the rotation angle about the rotation axis (24), the rotation angles of the springs (63, 64) of stiffnesses $k_r$, $k_{t2}$, the rotation angle about the elevation axis (29), and the rotation angle of the spring (65) of stiffness $k_{tp}$.

7. The method as claimed in claim 5, **characterized in that** a segment (21) comprising a tube (31) fitted with a connecting rod (33, 34) and provided at each end with a joint (26, 27), a first joint (26) being articulated about the joint (27) of the next segment through the intermediary of the rotation axis (24), the rotation movements being obtained by means of rotation pulleys (32) driving a rotation cable (42), one side of the segment (51) models the tube, the opposite side (52) models the connecting rod, the branch (57) models a balancing element and the rotation movement transmission element (42) models the rotation cable.

8. The method according to any one of the preceding claims, **characterized in that** a generalized error matrix $E_i$ associated with a segment (21) is a nonlinear function of six parameters $\varepsilon_1$, $\varepsilon_2$, $\varepsilon_3$, $\varepsilon_4$, $\varepsilon_4$, $\varepsilon_6$, three of these parameters $\varepsilon_1$, $\varepsilon_2$, $\varepsilon_3$ representing the Euler angles corresponding to the rotation movement of a system of coordinates (92) linked to the segment, the other three parameters $\varepsilon_4$, $\varepsilon_4$, $\varepsilon_6$ representing a translation in the space of the center $O_i$ of the system of coordinates (92), each generalized parameter is a polynomial function of the components of the configuration vector (q).

9. The method as claimed in claim 8, **characterized in that** the matrix $E_i$ is written in the following form:

$$
\mathbf{E_i} = \begin{bmatrix} C\varepsilon_4 C\varepsilon_6 - S\varepsilon_4 S\varepsilon_5 S\varepsilon_6 & -C\varepsilon_4 S\varepsilon_6 - S\varepsilon_4 C\varepsilon_5 C\varepsilon_6 & S\varepsilon_4 S\varepsilon_5 & \varepsilon_1 \\ S\varepsilon_4 C\varepsilon_6 + C\varepsilon_4 C\varepsilon_5 S\varepsilon_6 & -S\varepsilon_4 S\varepsilon_6 + C\varepsilon_4 C\varepsilon_5 C\varepsilon_6 & -C\varepsilon_4 S\varepsilon_5 & \varepsilon_2 \\ S\varepsilon_5 S\varepsilon_6 & S\varepsilon_5 C\varepsilon_6 & C\varepsilon_5 & \varepsilon_3 \\ 0 & 0 & 0 & 1 \end{bmatrix}
$$

$C\varepsilon_i$ representing the cosine of the Euler angle $\varepsilon_i$ and $S\varepsilon_i$ its sine.

**Patentansprüche**

1. Verfahren zur Kalibrierung der Position eines Mehrfach-Gelenksystems einer Kette aus N Segmenten (21), die untereinander durch eine Gelenkverbindung (24, 26, 27) verbunden sind, wobei die Kalibrierung die Differenz zwischen der gemessenen Position $X_m$ eines Organs (22), das mit dem letzten Segment der Kette verbunden ist, und seiner berechneten Position $X_C$ minimiert, wobei $X_C$ gleich dem Produkt $A_1.A_2 ... A_i ...... A_N.X_N$ ist, wobei jedem Ordnungssegment i (21) eine homogene Transformationsmatrix $A_i$ zugeordnet ist, wobei diese Matrix Funktion von Konfigurationsparametern (q) des Systems und von gegebenen allgemeinen Parametern (p) ist, die die Flexibilität des Segments (21) kennzeichnen, **dadurch gekennzeichnet, dass** das Verfahren aufweist:

   - einen ersten Schritt (1) der Berechnung eines flexiblen Modells des Systems, das aus den Matrizen $A_1$, $A_2$ ... $A_i$ ...... AN besteht,
   - einen zweiten Schritt (2) der Kalibrierung des flexiblen Modells durch Ermittlung einer Gruppe allgemeiner Parameter ($P_{opt}$) zur Minimierung der Differenz zwischen $X_m$ und $X_C$,
   - einen dritten Schritt (3) der allgemeinen polynomischen Kalibrierung des flexiblen Modells durch Einführung allgemeiner Fehlermatrizen $E_i$ zwischen den homogenen Transformationsmatrizen in das flexible Modell, wobei die berechnete Position $X_C$ gleich dem Produkt $A_1.E_1.A_2.E_2 ...... A_N.E_N.X_N$ ist, wobei jedem Ordnungssegment i eine allgemeine Fehlermatrix $E_i$ zugeordnet ist, wobei jede Matrix $E_i$ eines Segments eine polynomische Funktion der mit dem Segment verbundenen Konfigurationsparameter ist.

2. Verfahren nach Anspruch 1, **dadurch gekennzeichnet, dass** das flexible Modell des Systems im ersten Schritt (1) durch Bestimmung neuer allgemeiner Parameter (p) aus festen Parametern des Systems in einem iterativen Prozess ermittelt wird:

   - ein geometrisches Modell (84) wird in Abhängigkeit von Konfigurationsparametern (81), von allgemeinen Ursprungsparametern (82) und von geometrischen Eigenschaften (83) des Systems berechnet,
   - Deformationen (86) des Systems werden in Abhängigkeit vom geometrischen Modell (84) und von mechanischen Kräften (85) berechnet,
   - neue allgemeine Parameter (87) werden in Abhängigkeit der Deformationen (86) berechnet,
   - die neuen allgemeinen Parameter (87) werden mit den Ursprungsparametern (82) verglichen,
   - wenn die Differenz $\Delta P$ zwischen den neuen Parametern (87) und den Ursprungsparametern (82) kleiner als eine gegebene Schwelle $\varepsilon$ ist, wird das flexible Modell (90) aus den neuen allgemeinen Parametern (87) ermittelt,
   - im gegenteiligen Fall (80) wird eine neue Iteration durchgeführt, wobei diese Iteration das Modell (84) unter Verwendung der neuen allgemeinen Parameter berichtigt.

3. Verfahren nach Anspruch 2, **dadurch gekennzeichnet, dass** die mechanischen Kräfte Flexibilitätskräfte beinhalten, die zu den allgemeinen Parametern (p) aufweisen.

4. Verfahren nach einem der vorangehenden Ansprüche, **dadurch gekennzeichnet, dass** die Konfigurationsparameter (q) Winkel der Rotations- (24) und Hubachsen (29) im Verhältnis zu einer gegebenen Referenz aufweisen.

5. Verfahren nach einem der vorangehenden Ansprüche, **dadurch gekennzeichnet, dass** ein Segment (21) von einem Parallelogramm (25) und einer Rotationsachse (24) modelliert wird, die zwischen zwei Gabelbügeln (26, 27) angelenkt ist, wobei ein erster Gabelbügel (26) zum Segment gehört und der zweite Gabelbügel (27) zum nächsten Segment in der Kette gehört, wobei das Parallelogramm eine Hubbewegung um eine durch eine Spitze des Parallelogramms verlaufende Achse (29) modelliert, wobei das Segment Torsions-, Kompressions- und Traktionskräften ausgesetzt ist.

6. Verfahren nach Anspruch 5, **dadurch gekennzeichnet, dass** jedes Segment (21) von den folgenden Flexibilitätsparametern modelliert wird:

   - einer Feder (61) mit der Steifigkeit $k_{t1}$, die die Torsion des Gabelbügels (26) vor der Rotationsachse (24) darstellt,
   - einer Feder (62) mit der Steifigkeit $k_{f1}$, die die Flexion der Rotationsachse (24) darstellt,
   - einer Feder (63) mit der Steifigkeit $k_r$, die die Elastizität eines Elements zur Übertragung der Rotationsbewegung (42) darstellt,
   - einer Feder (64) mit der Steifigkeit $k_{t2}$, die die Torsion des Gabelbügels (27) nach der Rotationsachse (24) darstellt,

- einer Feder (65) mit der Steifigkeit $k_{tp}$, die die Torsion des Parallelogramms (25) darstellt,
- Federn (56, 58, 55) der Steifigkeit $k_{b1}$, die die Flexibilität einer Seite (52) des Parallelogramms darstellt, der Steifigkeit $k_{tube}$, die die Flexibilität der gegenüberliegenden Seite (51) darstellt und der Steifigkeit $k_{j1}$, die die Flexibilität eines Arms (57) darstellt, der einen Punkt (J) der benachbarten Seite (53) mit einem Ende (B) dieser Seite (51) verbindet,

wobei ein Rotationsmodell in Abhängigkeit der allgemeinen Flexibilitätsparameter $\varphi_{t1}$, $\varphi_{f1}$, $\theta$, $\varphi_r$, $\varphi_{t2}$, $\alpha$, $\varphi_{tb}$ ermittelt wird, die jeweils die Rotationswinkel der Federn (61, 62) der Steifigkeiten $k_{t1}$, $k_{f1}$, den Rotationswinkel um die Rotationsachse (24), die Rotationswinkel der Federn (63, 64) der Steifigkeiten $k_r$, $k_{t2}$, den Rotationswinkel um die Hubachse (29) und den Rotationswinkel der Feder (65) der Steifigkeit $k_{tp}$ darstellen.

7. Verfahren nach Anspruch 5, **dadurch gekennzeichnet, dass** ein Segment (21) ein Rohr (31) aufweist, das mit einem Pleuel (33, 34) ausgestattet und an jedem Ende mit einem Gabelbügel (26, 27) versehen ist, wobei ein erster Gabelbügel (26) über die Rotationsachse (24) um den Gabelbügel (27) des nächsten Segments angelenkt ist, wobei die Rotationsbewegungen mit Hilfe von Rotationsscheiben (32) erfolgen, die ein Rotationskabel (42) antreiben, wobei eine Seite des Segments (51) das Rohr modelliert, die gegenüberliegende Seite (52) das Pleuel modelliert, der Arm (57) ein Ausgleichselement modelliert und das Element zur Übertragung der Rotationsbewegung (42) das Rotationskabel modelliert.

8. Verfahren nach einem der vorangehenden Ansprüche, **dadurch gekennzeichnet, dass** eine allgemeine Fehlermatrix $E_i$, die einem Segment (21) zugeordnet ist, eine nicht lineare Funktion von sechs Parametern $\varepsilon_1$, $\varepsilon_2$, $\varepsilon_3$, $\varepsilon_4$, $\varepsilon_4$, $\varepsilon_6$ ist, wobei drei dieser Parameter $\varepsilon_1$, $\varepsilon_2$, $\varepsilon_3$ die Eulerwinkel darstellen, die einer Rotationsbewegung eines mit dem Segment verbundenen Bezugspunkts (92) entsprechen, wobei die anderen drei Parameter $\varepsilon_4$, $\varepsilon_4$, $\varepsilon_6$ eine Verschiebung im Raum des Zentrums $O_i$ des Bezugspunkts (92) darstellen, wobei jeder allgemeine Parameter eine polynomische Funktion der Komponenten des Konfigurationsvektors (q) ist.

9. Verfahren nach Anspruch 8, **dadurch gekennzeichnet, dass** die Matrix $E_i$ in folgender Form geschrieben wird:

$$\mathbf{E}_i = \begin{bmatrix} C\varepsilon_1 C\varepsilon_6 - S\varepsilon_1 S\varepsilon_3 S\varepsilon_6 & -C\varepsilon_1 S\varepsilon_6 - S\varepsilon_1 C\varepsilon_3 C\varepsilon_6 & S\varepsilon_1 S\varepsilon_3 & \varepsilon_1 \\ S\varepsilon_1 C\varepsilon_6 + C\varepsilon_1 C\varepsilon_3 S\varepsilon_6 & -S\varepsilon_1 S\varepsilon_6 + C\varepsilon_1 C\varepsilon_3 C\varepsilon_6 & -C\varepsilon_1 S\varepsilon_3 & \varepsilon_2 \\ S\varepsilon_3 S\varepsilon_6 & S\varepsilon_3 C\varepsilon_6 & C\varepsilon_3 & \varepsilon_3 \\ 0 & 0 & 0 & 1 \end{bmatrix}$$

wobei $C\varepsilon_i$ den Cosinus des Eulerwinkels $\varepsilon_1$ darstellt und $S\varepsilon_i$ seinen Sinus.

FIG.1

FIG.2

FIG.3

FIG.4

FIG.5

FIG.6

**FIG.7**

**FIG.9**

EP 2 158 065 B1

```
                          83                          85
                    ┌──────────────────┐        ┌──────────────────┐
                    │ Données géométriques :│     │ Données géométriques│
        81          │   masse,longueurs ...│      │  + gravité + flexibilité│
  ┌──────────────┐  └──────────────────┘        └──────────────────┘
  │ Configurations│           │        84                │       86
  └──────────────┘           ▼                          ▼
                    ┌──────────┐              ┌──────────────┐
                    │   MGD    │──────────────▶│ Déformations │
  ┌──────────────┐  └──────────┘              └──────────────┘
  │  Paramètres  │                                    │      87
  │  généralisés │          80                        ▼
  └──────────────┘      ┌──────┐            ┌──────────────────┐
        82             │  NON  │◀───────────│ Nouveaux paramètres│
                       └──────┘            │    généralisés    │
                          ▲                 └──────────────────┘
                       88 │                          │
              ─      ◇──────◇      +                 │
                    │Convergence ?│                  │
                    │   AP < ε    │                  │
                     ◇──────◇                        │
                        │                            ▼
                     ┌──────┐                ┌──────┐      ┌──────────┐
                     │  OUI │───────────────▶│ MGD  │─────▶│ MODELE   │
                     └──────┘                └──────┘      │ FLEXIBLE │
                                                89         └──────────┘
                                                                90
```

Configurations 81

Paramètres généralisés 82

Données géométriques : masse,longueurs ... 83

MGD 84

Données géométriques + gravité + flexibilité 85

Déformations 86

Nouveaux paramètres généralisés 87

NON 80

Convergence ? AP < ε 88

OUI

MGD 89

MODELE FLEXIBLE 90

## FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **B.Mooring.** Fundamentals of Manipulator Calibration. J.Wiley, 1991
- **Z.S.Roth ; Z.W.Mooring ; B.Ravani.** An Overview of Robot Calibration. *IEEE Journal of Robotics and Automation,* 1987, vol. 3 (5), 377-385
- **Ph.Drouet ; S.Dubowsky ; S.Zeghloul ; C.Mavroidis.** Compensation of Geometric and Elastic Errors in Large Manipulators with an Application to a High Accuracy Medical System. *Robotica,* 2002, vol. 2, 341-352
- **B.Shirinzadeh.** A Systematic Technique to Estimate Positionning Errors for Robot Accuracy Improvement Using Laser Interferometry Based Sensing. *Mechanism and Machine Theory,* 2005, vol. 40, 879-906
- **M.Meggiolaro ; S.Dubowsky ; C.Mavroidis.** Geometric and Elastic Error Calibration of a High Accuracy Patient Positionning System. *Mechanism and Machine Theory,* 2005, vol. 40, 415-427
- **W.Khalil ; E. Dombre.** Modélisation, identification et commande des robots. *Germes,* 1999, ISBN 2-7462-0003-1
- Geometric calibration of robots with flexible joints and links. **KHALIL W et al.** JOURNAL OF INTELLIGENT AND ROBOTIC SYSTEMS: THEORY AND APPLICATIONS. KLUWER ACADEMIC PUBLISHERS, Août 2002, vol. 34, 357-379
- **T.F.Coleman ; Y.Li.** On the Convergence of Reflective Newton Methods for Large-Scale Nonlinear Minimization Subject to Bounds. *Mathematical Programming,* 1994, vol. 67 (2), 189-224
- **M.Meggioalaro ; S. Dubowsky ; C. Mavroidis.** Geometric and elastic error calibration of a high accuracy patient positioning system. *Mechanism and Machine Theory,* 2005, vol. 40, 415-427